# EUROPEAN PATENT APPLICATION

(11) **EP 4 397 624 A1**
(43) Date of publication of application: **10.07.2024**
(21) Application number: 22864621.2
(22) Date of filing: 31.08.2022
(51) Int. Cl.: C01F 11/18, B09B 3/70, C01D 7/32, C04B 7/60

(54) **CALCIUM CARBONATE GENERATION METHOD AND SYSTEM**

(30) Priority: 31.08.2021 JP 2021141723
(71) Applicant: Sumitomo Osaka Cement Co., Ltd., Tokyo, 105-8641 (JP); Yamaguchi University, Yamaguchi 753-8511 (JP); Kyushu University, National University Corporation, Nishi-ku Fukuoka-shi Fukuoka 819-0395 (JP)
(72) Inventor: KIKUCHI, Sadato, Tokyo 105-8641 (JP); NAKAMURA, Shogo, Tokyo 105-8641 (JP); OIZUMI, Risa, Tokyo 105-8641 (JP); KONISHI, Masayoshi, Tokyo 105-8641 (JP); HIGA, Mitsuru, Ube-shi, Yamaguchi 755-8611 (JP); TANIGUCHI, Ikuo, Fukuoka-shi, Fukuoka 819-0395 (JP)
(74) Representative: Sonnenberg Harrison Partnerschaft mbB
(86) International application number: PCT/JP2022/032756
(87) International publication number: WO 2023/033039

(57) **Abstract**

Provided is a calcium carbonate generation method and system in which calcium carbonate having a high purity can be generated using a calcium-containing waste. Provided is a calcium carbonate generation method of generating calcium carbonate from a calcium-containing waste, the calcium carbonate generation method including: a calcium dissolution step of adding aqueous hydrochloric acid to a calcium-containing waste and dissolving calcium to generate an aqueous solution containing a calcium ion; a separation step of adjusting a hydrogen ion concentration index of the aqueous solution containing a calcium ion and separating a component containing at least one selected from the group consisting of Si, Al, Mg, and heavy metal from the aqueous solution; and a calcium carbonate collection step of generating calcium carbonate using an aqueous solution obtained in the separation step and an aqueous solution containing potassium carbonate and/or sodium carbonate.

## Description

### Technical Field

The present invention relates to a calcium carbonate generation method and system and particularly relates to a method and a system of generating calcium carbonate from a calcium-containing waste.

### Background Art

Calcium carbonate is used in various industrial fields of a filler such as a plastic, paper, or a coating material, a soil conditioner such as an agricultural chemical or a fertilizer, a food additive, a cosmetic raw material, and the like.

Calcium carbonate is synthesized by blowing carbon dioxide into a calcium hydroxide aqueous solution, or is synthesized by mixing an aqueous solution containing a calcium ion such as calcium chloride and a sodium carbonate aqueous solution.

Recently, as disclosed in Patent Literature No. 1, in order to reduce carbon dioxide that is a greenhouse gas, calcium carbonate may be generated in the process of fixing carbon dioxide. In Patent Literature No. 1, in order to supply a large amount of calcium or the like, a calcium-containing waste, for example, a waste material or rock such as a waste concrete or an iron and steel slag is used.

In Patent Literature No. 1, as a method of dissolving calcium from the calcium-containing waste, nitric acid is used. In this stage, not only calcium but also another element such as magnesium are dissolved in an aqueous solution. In Patent Literature No. 1, an aqueous solution of sodium carbonate generated by bringing sodium hydroxide and carbon dioxide into contact with each other is introduced into an aqueous solution containing calcium nitrate, magnesium nitrate, or the like such that calcium carbonate or magnesium carbonate is precipitated.

In addition, in order to generate nitric acid or sodium hydroxide, Patent Literature No. 1 also discloses that a bipolar membrane electrodialysis treatment is performed on sodium nitrate generated in a precipitation step of calcium carbonate or the like.

However, when the calcium-containing waste is used, the waste itself contains a large amount of impurities other than calcium, and there is a problem in that the purity of the generated calcium carbonate itself decreases.

Furthermore, for a filler such as a plastic, the production of calcium carbonate having a high purity is required.

### Citation List

### Patent Literature

[Patent Literature No. 1] Japanese Laid-open Patent Publication No. 2012-96975

### Summary of Invention

### Technical Problem

An object of the present invention is to solve the above-described problem and to provide a calcium carbonate generation method and system in which calcium carbonate having a high purity can be generated using a calcium-containing waste.

### Solution to Problem

In order to solve the problem, the calcium carbonate generation method and system according to the present invention have the following technical features.
(1) A calcium carbonate generation method of generating calcium carbonate from a calcium-containing waste, the calcium carbonate generation method including:
   a calcium dissolution step of adding aqueous hydrochloric acid to a calcium-containing waste and dissolving calcium to generate an aqueous solution containing a calcium ion;
   a separation step of adjusting a hydrogen ion concentration index of the aqueous solution containing a calcium ion and separating a component containing at least one selected from the group consisting of Si, Al, Mg, and heavy metal from the aqueous solution; and
   a calcium carbonate collection step of generating calcium carbonate using an aqueous solution obtained in the separation step and an aqueous solution containing potassium carbonate and/or sodium carbonate.
(2) The calcium carbonate generation method according to (1),
   in which the aqueous hydrochloric acid is generated from an aqueous solution containing potassium chloride and/or sodium chloride through a bipolar membrane electrodialysis treatment, and as to the potassium chloride and/or the sodium chloride, at least a part of an aqueous solution containing potassium chloride and/or sodium chloride generated in the calcium carbonate collection step is used.
(3) The calcium carbonate generation method according to (2),
   in which an aqueous solution containing potassium hydroxide and/or sodium hydroxide is generated by the bipolar membrane electrodialysis treatment, carbon dioxide is brought into contact with the aqueous solution containing potassium hydroxide and/or sodium hydroxide to generate an aqueous solution containing potassium carbonate and/or sodium carbonate, and the aqueous solution containing potassium carbonate and/or sodium carbonate is used in the calcium carbonate collection step.
(4) The calcium carbonate generation method according to (3),
   in which as to the carbon dioxide, carbon dioxide exhausted from a cement manufacturing facility is used.
(5) The calcium carbonate generation method according to any one of (1) to (4),
   in which the calcium-containing waste contains desalination dust obtained from a desalination bypass portion of a cement manufacturing facility.
(6) A calcium carbonate generation system of generating calcium carbonate from a calcium-containing waste, the calcium carbonate generation system including:
   calcium dissolution means for adding aqueous hydrochloric acid to a calcium-containing waste and dissolving calcium to generate an aqueous solution containing a calcium ion;
   separation means for adjusting a hydrogen ion concentration index of the aqueous solution containing a calcium ion and separating a component containing at least one selected from the group consisting of Si, Al, Mg, and heavy metal from the aqueous solution; and
   calcium carbonate collection means for generating calcium carbonate using an aqueous solution obtained by the separation means and an aqueous solution containing potassium carbonate and/or sodium carbonate.
(7) The calcium carbonate generation system according to (6),
   in which the aqueous hydrochloric acid is generated from an aqueous solution containing potassium chloride and/or sodium chloride through bipolar membrane electrodialysis treatment means, and as to the potassium chloride and/or the sodium chloride, at least a part of an aqueous solution containing potassium chloride and/or sodium chloride generated by the calcium carbonate collection means is used.
(8) The calcium carbonate generation system according to (7),
   in which an aqueous solution containing potassium hydroxide and/or sodium hydroxide is generated by the bipolar membrane electrodialysis treatment means, carbon dioxide is brought into contact with the aqueous solution containing potassium hydroxide and/or sodium hydroxide to generate an aqueous solution containing potassium carbonate and/or sodium carbonate, and the aqueous solution containing potassium carbonate and/or sodium carbonate is used for the calcium carbonate collection means.
(9) The calcium carbonate generation system according to (8),
   in which as to the carbon dioxide, carbon dioxide exhausted from a cement manufacturing facility is used.
(10) The calcium carbonate generation system according to any one of (6) to (9),
   in which the calcium-containing waste contains desalination dust obtained from a desalination bypass portion of a cement manufacturing facility.

### Advantageous Effects of Invention

According to the present invention, there is provided a calcium carbonate generation method (generation system) of generating calcium carbonate from a calcium-containing waste, the calcium carbonate generation method (generation system) including: a calcium dissolution step (calcium dissolution means) of adding aqueous hydrochloric acid to a calcium-containing waste and dissolving calcium to generate an aqueous solution containing a calcium ion; a separation step (separation means) of adjusting a hydrogen ion concentration index of the aqueous solution containing a calcium ion and separating a component containing at least one selected from the group consisting of Si, Al, Mg, and heavy metal from the aqueous solution; and a calcium carbonate collection step (calcium carbonate collection means) of generating calcium carbonate using an aqueous solution obtained in the separation step (separation means) and an aqueous solution containing potassium carbonate and/or sodium carbonate. Therefore, calcium carbonate having a high purity can be easily obtained.

In particular, simply by adjusting the hydrogen ion concentration index, various impurities can be easily removed. Therefore, the generation step of calcium carbonate is not also complicated.

In addition, the obtained residue can also be used for cement manufacturing.

### Brief Description of Drawings

FIG. 1 is a flowchart illustrating a calcium carbonate generation method according to the present invention.
FIG. 2 is a diagram illustrating a carbon dioxide fixing method using the calcium carbonate generation method according to the present invention.
FIG. 3 is a graph illustrating a temporal change in Ca extraction rate in fly ash (FA1) collected in a general waste incineration facility A.
FIG. 4 is a graph illustrating a temporal change in K extraction rate in FA1.
FIG. 5 is a graph illustrating a temporal change in Cr extraction rate in FA1.
FIG. 6 is a graph illustrating a temporal change in Pb extraction rate in FA1.
FIG. 7 is a graph illustrating a temporal change in Si extraction rate in FA1.
FIG. 8 is a graph illustrating a temporal change in Al extraction rate in FA1.
FIG. 9 is a graph illustrating a temporal change in Mg extraction rate in FA1.
FIG. 10 is a graph illustrating a temporal change in Ca extraction rate in fly ash (FA2) collected in a general waste incineration facility B.
FIG. 11 is a graph illustrating a temporal change in Ca extraction rate in ready-mixed concrete sludge (CS1) collected in a drainage step of a ready mixed concrete plant A.
FIG. 12 is a graph illustrating a temporal change in Ca extraction rate in ready-mixed concrete sludge (CS2) collected in a drainage step of a ready mixed concrete plant B.

### Description of Embodiments

Hereinafter, a calcium carbonate generation method and system according to the present invention will be described in detail using a preferable example with reference to the drawings.

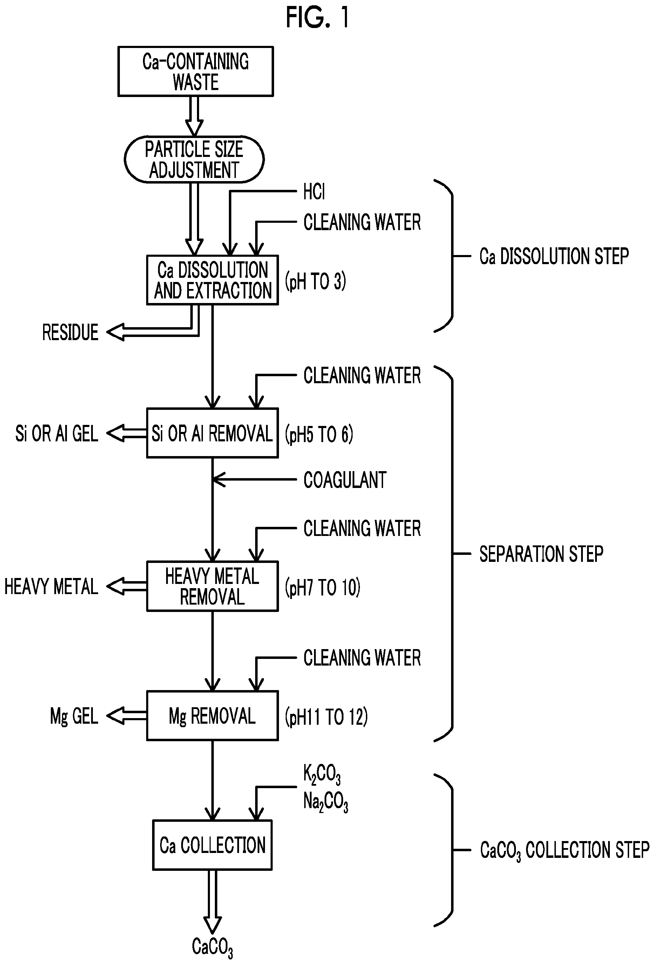

As illustrated in FIG. 1, according to the present invention, there is provided a calcium carbonate generation method (calcium carbonate generation system) of generating calcium carbonate from a calcium (Ca)-containing waste, the calcium carbonate generation method including: a calcium dissolution step (calcium dissolution means) of adding aqueous hydrochloric acid to a calcium-containing waste and dissolving calcium to generate an aqueous solution containing a calcium ion; a separation step (separation means) of adjusting a hydrogen ion concentration index of the aqueous solution containing a calcium ion and separating a component containing at least one selected from the group consisting of Si, Al, Mg, and heavy metal from the aqueous solution; and a calcium carbonate collection step (calcium carbonate collection means) of generating calcium carbonate using an aqueous solution obtained in the separation step (separation means) and an aqueous solution containing potassium carbonate and/or sodium carbonate.

In FIG. 1, a double-line arrow represents the flow of a solid, and a single-line arrow represents the flow of a liquid. In addition, in the following description, the method of generating calcium carbonate will be mainly described.

Examples of the Ca-containing waste used in the present invention include incinerated ash such as a general waste or an industrial waste, fly ash exhausted from a thermal power plant or the like, slag, a waste concrete, ready-mixed concrete sludge, and biochemical ash.

In particular, as described below, desalination dust obtained from a desalination bypass portion in a cement manufacturing facility contains a potassium chloride component, and thus can be suitably used for the present invention.

The particle size of the Ca-containing waste is adjusted to be in a range of 1000 µm or less and preferably 100 µm or more and 500 µm or less. As a result, Ca can be easily extracted.

In the Ca dissolution step (Ca dissolution means), aqueous hydrochloric acid is added to the Ca-containing waste of which the particle size is adjusted to adjust the hydrogen ion concentration index to be in a range of preferably pH of 0.5 or higher and pH of 5 or lower.

At this time, cleaning water may be optionally added. Cleaning is performed to replace a liquid in a solid content with fresh water during solid-liquid separation.

A reaction time required for Ca extraction from the Ca-containing waste is 120 minutes or shorter and preferably 30 minutes or longer and 60 minutes or shorter. In addition, the dissolution and extraction can also be performed in multiple stages, in particular, in a multi-stage counter current.

The temperature of an aqueous solution containing hydrochloric acid during Ca extraction is to be in a range of preferably room temperature or higher and more preferably 20°C or higher and 70°C or lower. Since a membrane used in the bipolar membrane electrodialysis (BMED) treatment described below is an organic membrane, the temperature of the aqueous solution is also set in consideration of the heat-resistant temperature of the membrane.

In the Ca dissolution step (Ca dissolution means), a residue and an aqueous solution are separated from each other, and the residue can be used as, for example, a cement raw material in a cement manufacturing facility.

The aqueous solution containing a Ca ion obtained in the Ca dissolution step (Ca dissolution means) contains an impurity ion other than Ca, and the impurity ion is separated by adjusting the hydrogen ion concentration index in the separation step (separation means).

By adjusting the pH of the aqueous solution containing a Ca ion obtained in the Ca dissolution step (Ca dissolution means) to, for example, pH of 5 to 6 using sodium hydroxide or potassium hydroxide, a Si or Al ion in the aqueous solution containing a Ca ion can be removed as a gel. In addition, optionally, cleaning water such as fresh water can also be added to clean a solid content. This gel can be used as a cement raw material.

Next, by adjusting the pH of the Ca ion-containing aqueous solution from which the Si or Al ion is removed to, for example, pH of 7 to 10, using sodium hydroxide or potassium hydroxide, heavy metal such as a Pb or Cr ion can be separated. In addition, optionally, cleaning water such as fresh water can also be added, and a solid content is cleaned by the cleaning.

Before removing the heavy metal, optionally, a coagulant can also be added to the Ca ion-containing aqueous solution. For example, a polymer coagulant or an inorganic coagulant can be used. Examples of the inorganic coagulant include an iron salt such as ferric polysulfate and an aluminum salt such as aluminum sulfate or aluminum polychloride. As the polymer coagulant, for example, an anionic, nonionic, or cationic coagulant that is suitable in terms of pH and particle properties may be used, and examples thereof include a polyacrylamide-based coagulant, a sodium polyacrylate-based coagulant, and a polyacrylic ester-based coagulant.

Next, by adjusting the pH of the Ca ion-containing aqueous solution from which the heavy metal ion is removed to, for example, pH of 11 to 12, using sodium hydroxide or potassium hydroxide, an Mg ion in the aqueous solution can be removed as a gel. In addition, optionally, cleaning water such as fresh water can also be added, and a solid content is cleaned by the cleaning.

By adding the aqueous solution containing potassium carbonate and/or sodium carbonate to the Ca ion-containing aqueous solution from which the unnecessary impurities are separated and removed, high-purity calcium carbonate is generated, and the calcium carbonate and the potassium chloride and/or sodium chloride aqueous solution are separated from each other. Actually, when the purity of calcium carbonate is calculated from weight loss at 550°C to 800°C using a thermal analysis equipment (TG), a value of 95.7% is obtained.

The obtained calcium carbonate is used in the filler such as a plastic, paper, or a coating material, the soil conditioner such as an agricultural chemical or a fertilizer, the food additive, the cosmetic raw material, and the like described above. In the present invention, the high-purity calcium carbonate containing no impurities such as magnesium carbonate can be obtained.

In addition, the calcium carbonate can be used not only as a cement raw material but also as a cement weighting agent.

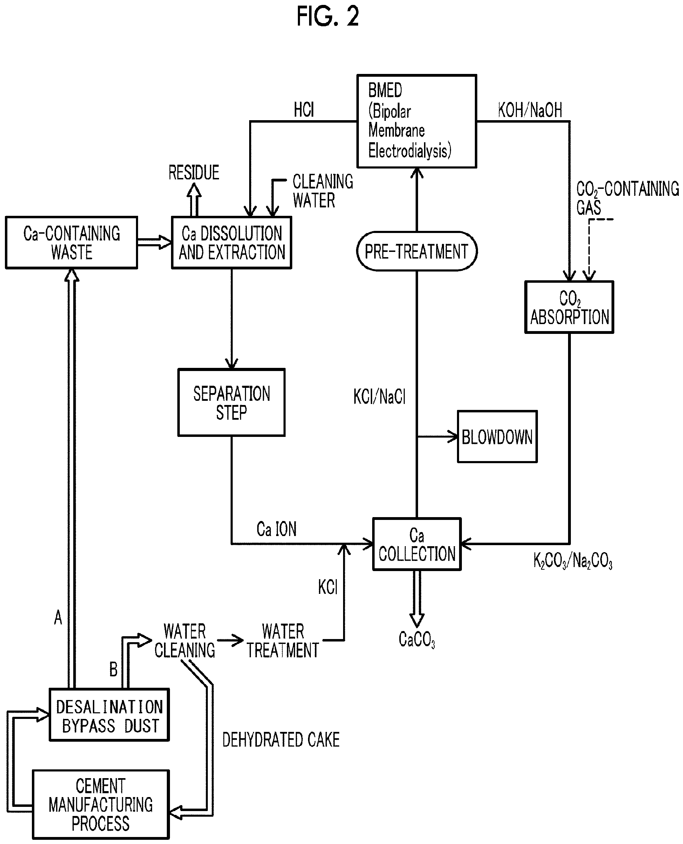

FIG. 2 illustrates the calcium carbonate generation method of FIG. 1 into which a step method of fixing carbon dioxide is incorporated.

In FIG. 2, a double-line arrow represents the flow of a solid, a single-line arrow represents the flow of a liquid, and a dotted line represents the flow of a gas.

The aqueous hydrochloric acid used in the Ca dissolution step (Ca dissolution means) is generated from an aqueous solution containing potassium chloride and/or sodium chloride through a bipolar membrane electrodialysis (BMED) treatment (BMED treatment means).

In addition, as to the potassium chloride and/or the sodium chloride, an aqueous solution containing potassium chloride and/or sodium chloride generated in the calcium carbonate collection step (calcium carbonate collection means) of FIG. 1 can be used.

As to the potassium chloride and/or the sodium chloride generated in the calcium carbonate collection step (calcium carbonate collection means) (represented by "Ca collection" in FIG. 2), optionally, a pre-treatment of, for example, removing a fine particles through a MF membrane (microfiltration membrane) and concentrating the aqueous solution through a RO membrane (reverse osmosis membrane) can also be performed.

The bipolar membrane electrodialysis (BMED) electrically operates to generate the aqueous solution containing potassium hydroxide and/or sodium hydroxide other than aqueous hydrochloric acid at the same time.

Carbon dioxide is brought into contact with the aqueous solution containing potassium hydroxide and/or sodium hydroxide to absorb carbon dioxide and to thereby generate an aqueous solution containing potassium carbonate and/or sodium carbonate.

This aqueous solution containing potassium carbonate and/or sodium carbonate can be used in the calcium carbonate collection step (calcium carbonate collection means) of FIG. 1.

As to carbon dioxide, carbon dioxide in combustion exhaust gas from a thermal power plant or the like or in exhaust gas from a cement manufacturing facility can be used, and carbon dioxide in the atmosphere can also be directly absorbed and used.

As the Ca-containing waste to be used, in addition to the above-described examples, desalination dust obtained from a desalination bypass portion of a cement manufacturing facility can also be suitably used.

The reason for this is as follows. The desalination dust contains potassium chloride, and by using the desalination dust in the Ca dissolution step as indicated by arrow A, an aqueous solution containing potassium chloride is generated.

Therefore, in the aqueous solution circulating in the step of FIG. 2, the concentration of potassium chloride is more than the concentration of sodium chloride.

The potassium chloride is introduced into the bipolar membrane electrodialysis (BMED) means in the calcium carbonate collection step (calcium carbonate collection means) (Ca collection). As the concentration of the potassium chloride increases, and the current efficiency in BMED is improved, which also contributes to power saving.

In addition, the Ca-containing waste contains Na. Therefore, the cyclic use is continued as in FIG. 2, the Na ion concentration increases. Therefore, blowdown is performed in the middle of a path from the Ca collection to the BMED such that the Na ion concentration is fixed. On the other hand, during this blowdown, potassium chloride is also exhausted. Therefore, potassium chloride (KCl) lacks in the treatment process (treatment system). In order to compensate for this lack, it is more effective to use the desalination dust containing potassium chloride as the Ca-containing waste.

In addition, the desalination dust can also be configured to be supplied between the separation step and the calcium carbonate collection step after performing a water treatment of cleaning the desalination dust by water to generate an aqueous solution containing potassium chloride and removing impurities or the like as indicated by arrow B in FIG. 2. In the treatment process of FIG. 2, the aqueous solution containing potassium chloride obtained from the desalination dust can also be introduced in the middle of a path from the blowdown to the BMED.

The desalination dust cleaned by water can also be dehydrated such that the dehydrated cake returns to a cement manufacturing process as a cement raw material.

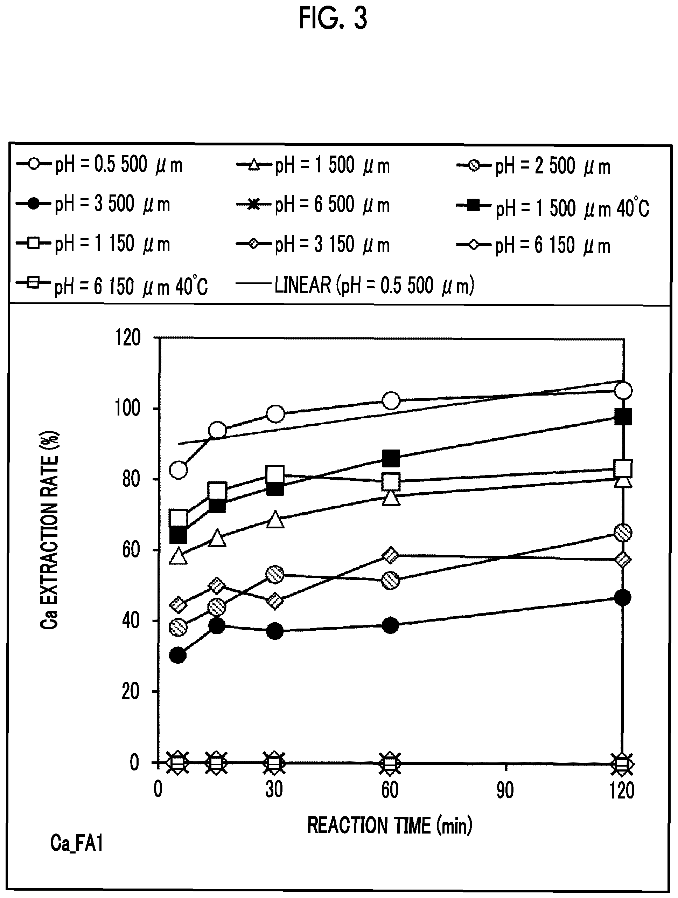

FIGS. 3 to 9 are graphs illustrating temporal changes in extraction rates of Ca and the like in fly ash (FA1) collected in a general waste incineration facility A. The extraction rate refers to "a ratio of the amount of a dissolved component to the total amount of components in the waste".

When the particle size of the fly ash is set as 150 µm (only in FIG. 3) or 500 µm, the temperature of the aqueous solution is room temperature (20°C) or 40°C (only in FIG. 3), and the hydrogen ion concentration index is set as pH of 0.5, 1, 2, 3, or 6, the extraction rate is measured.

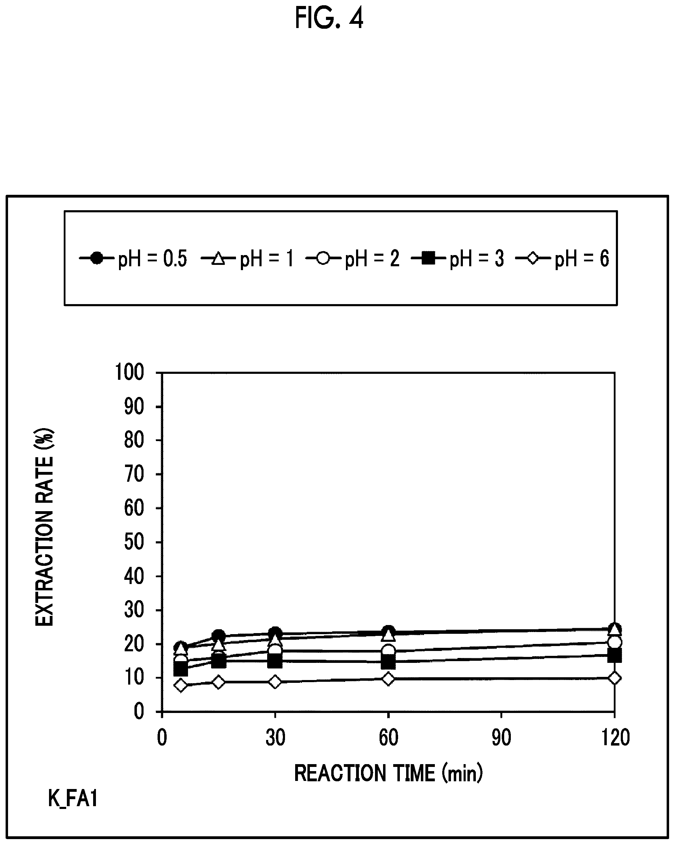

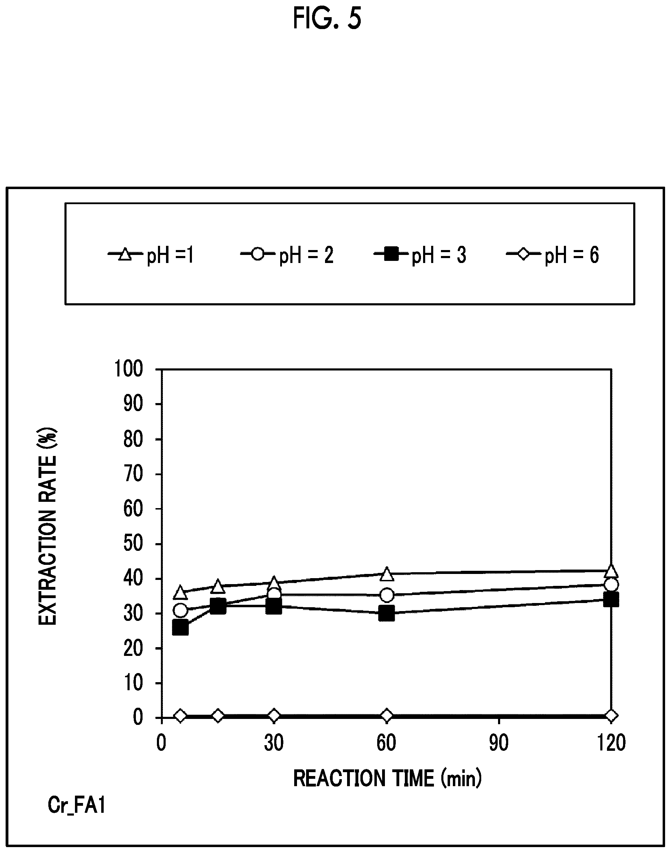

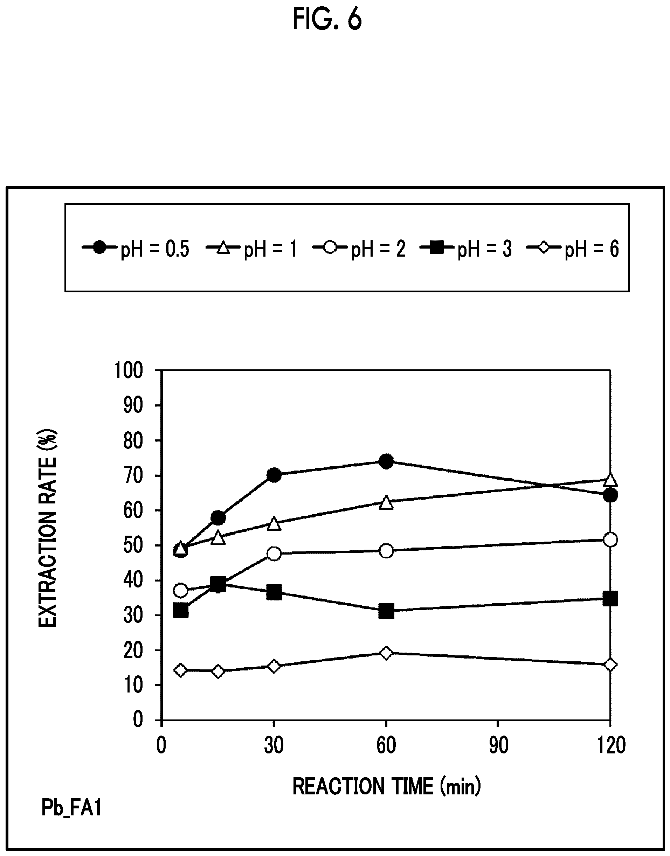

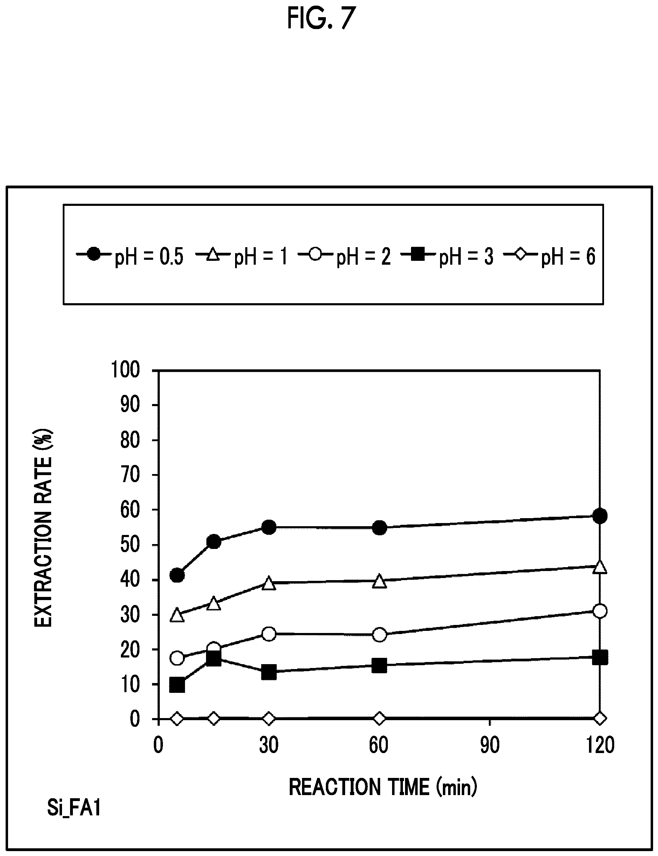

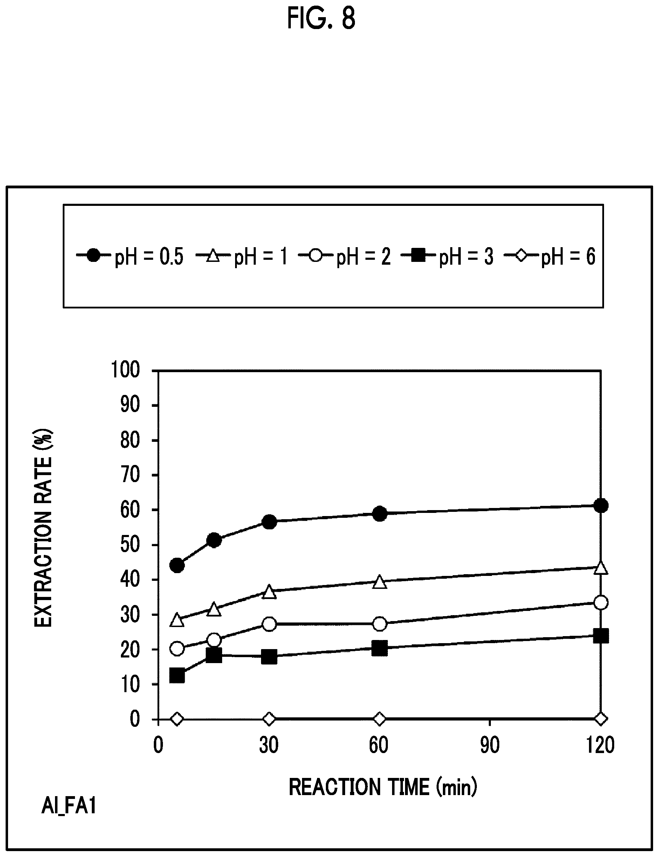

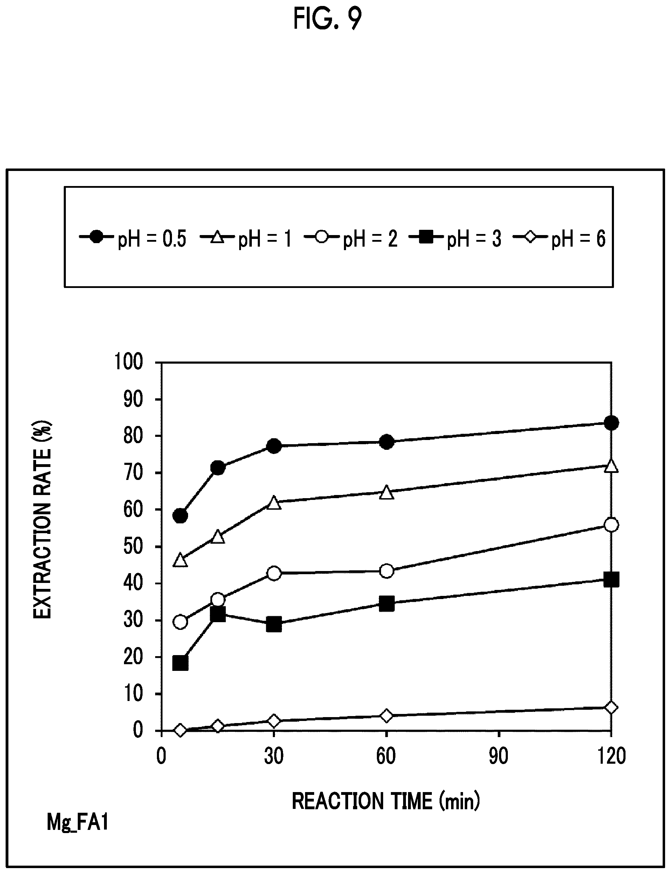

FIG. 3 illustrates Ca, FIG. 4 illustrates K, FIG. 5 illustrates Cr, FIG. 6 illustrates Pb, FIG. 7 illustrates Si, FIG. 8 illustrates Al, and FIG. 9 illustrates Mg.

Referring to FIG. 3, the pH required for the Ca extraction is 3 or lower.

The Ca extraction rate shows a gradual change depending on the reaction time (elapsed time) after 30 minutes, particularly, after 60 minutes, and it is understood that the Ca dissolution and extraction is almost completed after 30 minutes.

In addition, as a general tendency, when the case where the pH is 1 and the case where the pH is 3 are compared, it is understood that the extraction rate increases as the particle size decreases, and when the cases where the pH is 1 are compared, it is understood that the extraction rate increases as the temperature of the aqueous solution increases.

Referring to FIGS. 4 to 9, when the pH is 3 or lower, all of K, Cr, Pb, Si, Al, and Mg show sufficient dissolution after 30 minutes. Therefore, it is essential to remove these impurity ions more effectively than Ca.

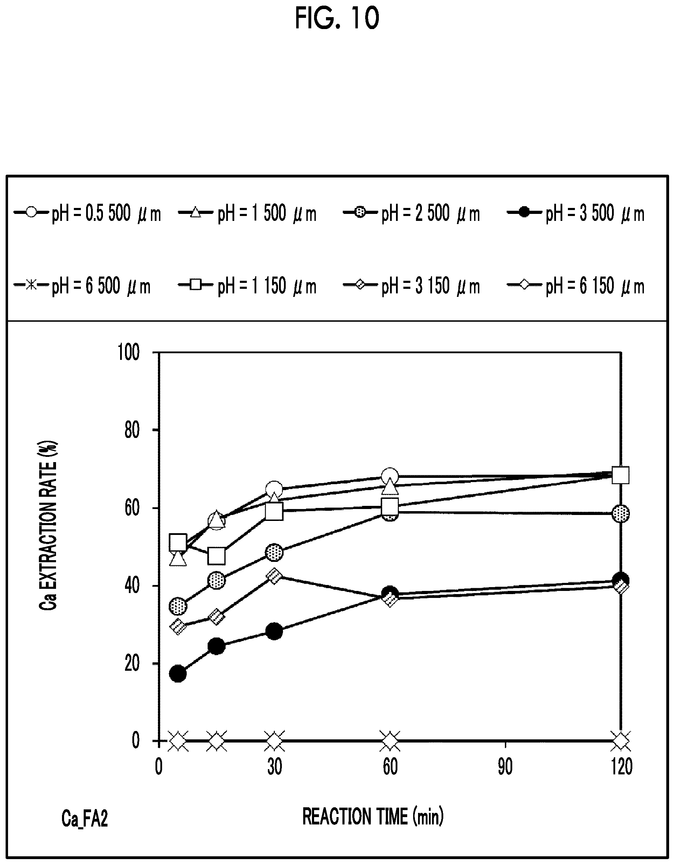

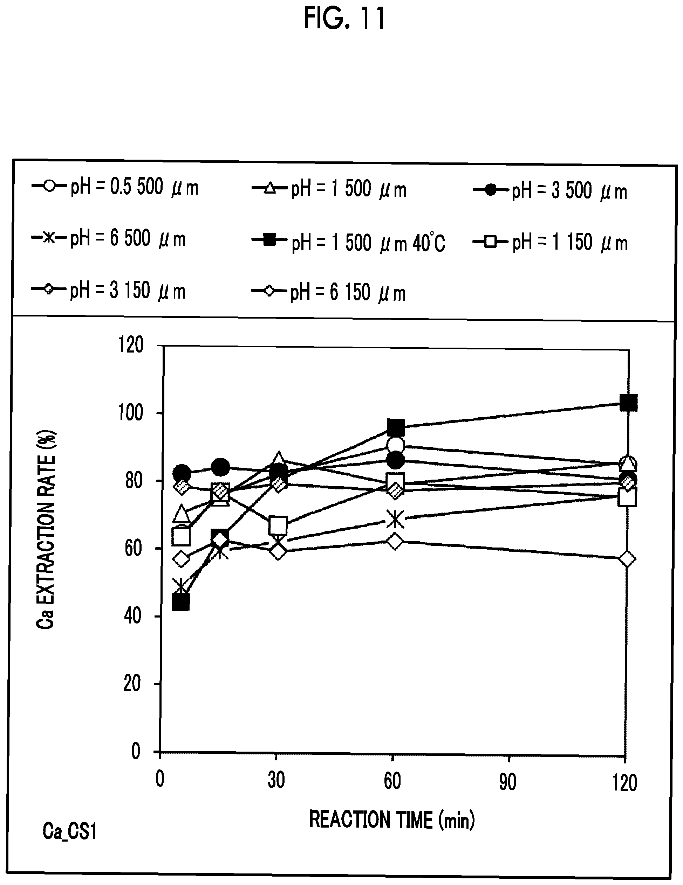

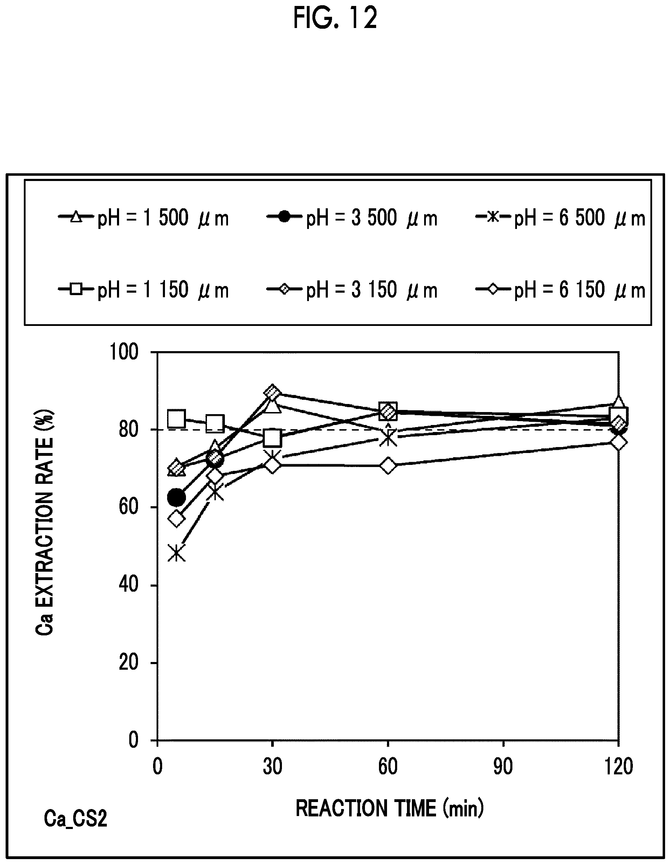

FIGS. 10 to 12 are graphs illustrating temporal changes in Ca extraction rates of samples, in which FIG. 10 illustrates fly ash (FA2) collected from a general waste incineration facility B, FIG. 11 illustrates ready-mixed concrete sludge (CS1) collected from a drainage step of a ready mixed concrete plant A, and FIG. 12 illustrates ready-mixed concrete sludge (CS2) collected from a drainage step of a ready mixed concrete plant B.

The pH of the aqueous solution is set as 0.5, 1, 3, or 6, the particle size is set as 150 µm or 500 µm, and the aqueous solution temperature is set as room temperature (20°C) or 40°C.

As to the fly ash of FIG. 10, as in FIG. 3, when the pH is 3 or lower and preferably 1 or lower, the Ca extraction rate increases.

As to the ready-mixed concrete sludge of FIG. 11 or FIG. 12, when the pH is 6 or lower, the Ca extraction rate also increases.

Even after 30 minutes, the change in extraction rate becomes gradual. In addition, when the particle size is small and when the temperature of the aqueous solution is high, the dissolution rate tends to increase.

### Industrial Applicability

As described above, according to the present invention, it is possible to provide a calcium carbonate generation method and system in which calcium carbonate having a high purity can be generated using a calcium-containing waste.

In addition, the obtained residue can also be used as a cement raw material or the like.

## Claims

1. A calcium carbonate generation method of generating calcium carbonate from a calcium-containing waste, the calcium carbonate generation method comprising:
a calcium dissolution step of adding aqueous hydrochloric acid to a calcium-containing waste and dissolving calcium to generate an aqueous solution containing a calcium ion;
a separation step of adjusting a hydrogen ion concentration index of the aqueous solution containing a calcium ion and separating a component containing at least one selected from the group consisting of Si, Al, Mg, and heavy metal from the aqueous solution; and
a calcium carbonate collection step of generating calcium carbonate using an aqueous solution obtained in the separation step and an aqueous solution containing potassium carbonate and/or sodium carbonate.

2. The calcium carbonate generation method according to claim 1,
wherein the aqueous hydrochloric acid is generated from an aqueous solution containing potassium chloride and/or sodium chloride through a bipolar membrane electrodialysis treatment, and as to the potassium chloride and/or the sodium chloride, at least a part of an aqueous solution containing potassium chloride and/or sodium chloride generated in the calcium carbonate collection step is used.

3. The calcium carbonate generation method according to claim 2,
wherein an aqueous solution containing potassium hydroxide and/or sodium hydroxide is generated by the bipolar membrane electrodialysis treatment, carbon dioxide is brought into contact with the aqueous solution containing potassium hydroxide and/or sodium hydroxide to generate an aqueous solution containing potassium carbonate and/or sodium carbonate, and the aqueous solution containing potassium carbonate and/or sodium carbonate is used in the calcium carbonate collection step.

4. The calcium carbonate generation method according to claim 3,
wherein as to the carbon dioxide, carbon dioxide exhausted from a cement manufacturing facility is used.

5. The calcium carbonate generation method according to any one of claims 1 to 4, wherein the calcium-containing waste contains desalination dust obtained from a desalination bypass portion of a cement manufacturing facility.

6. A calcium carbonate generation system of generating calcium carbonate from a calcium-containing waste, the calcium carbonate generation system comprising:
calcium dissolution means for adding aqueous hydrochloric acid to a calcium-containing waste and dissolving calcium to generate an aqueous solution containing a calcium ion;
separation means for adjusting a hydrogen ion concentration index of the aqueous solution containing a calcium ion and separating a component containing at least one selected from the group consisting of Si, Al, Mg, and heavy metal from the aqueous solution; and
calcium carbonate collection means for generating calcium carbonate using an aqueous solution obtained by the separation means and an aqueous solution containing potassium carbonate and/or sodium carbonate.

7. The calcium carbonate generation system according to claim 6,
wherein the aqueous hydrochloric acid is generated from an aqueous solution containing potassium chloride and/or sodium chloride through bipolar membrane electrodialysis treatment means, and as to the potassium chloride and/or the sodium chloride, at least a part of an aqueous solution containing potassium chloride and/or sodium chloride generated by the calcium carbonate collection means is used.

8. The calcium carbonate generation system according to claim 7,
wherein an aqueous solution containing potassium hydroxide and/or sodium hydroxide is generated by the bipolar membrane electrodialysis treatment means, carbon dioxide is brought into contact with the aqueous solution containing potassium hydroxide and/or sodium hydroxide to generate an aqueous solution containing potassium carbonate and/or sodium carbonate, and the aqueous solution containing potassium carbonate and/or sodium carbonate is used for the calcium carbonate collection means.

9. The calcium carbonate generation system according to claim 8,
wherein as to the carbon dioxide, carbon dioxide exhausted from a cement manufacturing facility is used.

10. The calcium carbonate generation system according to any one of claims 6 to 9,
wherein the calcium-containing waste contains desalination dust obtained from a desalination bypass portion of a cement manufacturing facility.
